Europäisches Patentamt

European Patent Office

Office européen des brevets

(19)

(11) Veröffentlichungsnummer: **0 293 993**
**A2**

(12) **EUROPÄISCHE PATENTANMELDUNG**

(21) Anmeldenummer: **88201088.7**

(22) Anmeldetag: **31.05.88**

(51) Int. Cl.⁴: **G11B 23/087**

(30) Priorität: **03.06.87 AT 1409/87**

(43) Veröffentlichungstag der Anmeldung:
**07.12.88 Patentblatt 88/49**

(84) Benannte Vertragsstaaten:
**AT DE FR GB**

(71) Anmelder: **N.V. Philips' Gloeilampenfabrieken**
**Groenewoudseweg 1**
**NL-5621 BA Eindhoven(NL)**

(72) Erfinder: **Drahanowsky, Walter**
**c/o INT. OCTROOIBUREAU B.V. Prof.**
**Holstlaan 6**
**NL-5656 AA Eindhoven(NL)**

(74) Vertreter: **Smit, Frederik Jan et al**
**INTERNATIONAAL OCTROOIBUREAU B.V.**
**Prof. Holstlaan 6**
**NL-5656 AA Eindhoven(NL)**

(54) Wickelkern für ein Band.

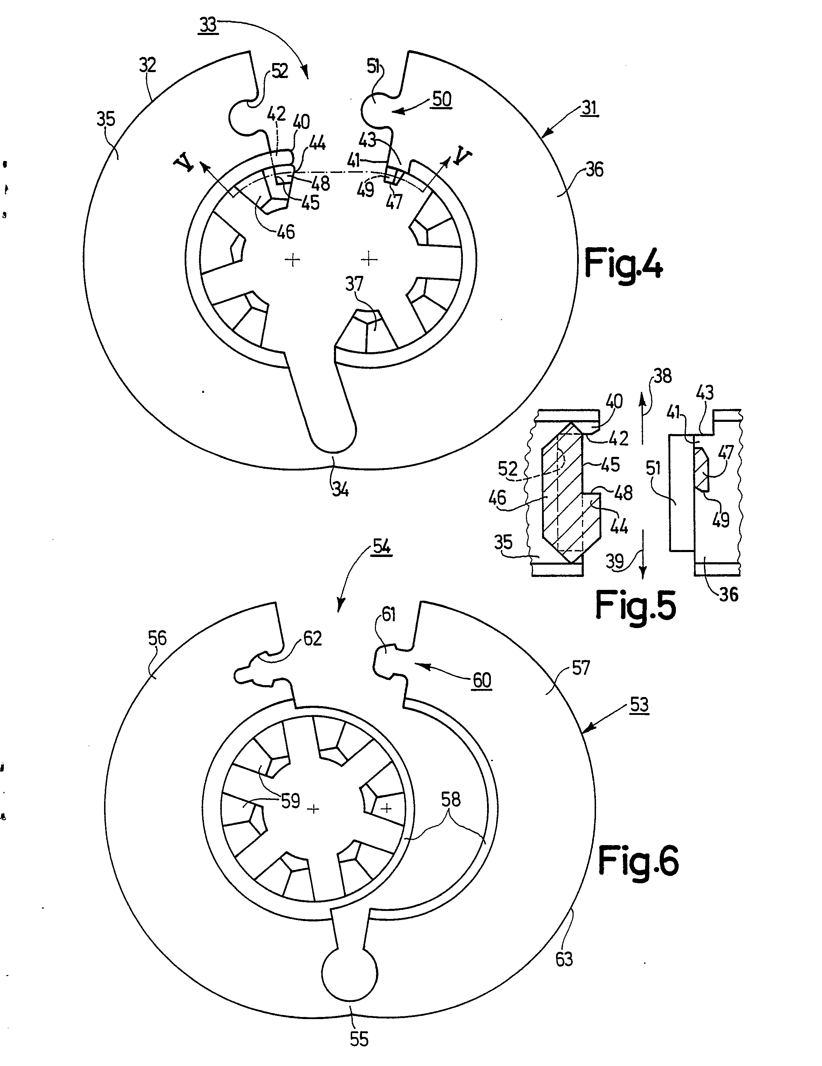

㊗ Ein zylindrischer Wickelkern (3) für ein Band (2), insbesondere ein Magnetband oder ein Farbband, ist längs einer Teilungszone (21) in zwei teilzylindrische Wickelkernteile (22, 23) geteilt, die mit einem die Teilungszone (21) an einem Ende abschließenden, ein Gelenk zwischen den beiden Wickelkernteilen (22, 23) bildenden, elastisch deformierbaren Steg (24) einstückig miteinander verbunden und mit einer im Bereich des offenen Endes der Teilungszone (21) vorgesehenen Verbindungseinrichtung (25) zusammengehalten sind und die ein in die Teilungszone (21) eingeführtes Band (2) zwischen sich festklemmen, wobei die beiden Enden der Teilungszone (21) im wesentlichen diametral zueinander liegen und die Teilungszone (21) im Bereich von ihrem offenen Ende im wesentlichen radial verläuft (Fig. 3).

## Wickelkern für ein Band

Die Erfindung bezieht sich auf einen Wickelkern für ein Band, insbesondere ein Magnetband oder ein Farbband, über dessen zylindrische Umfangsfläche das Band wickelbar ist und der längs einer Teilungszone in zwei teilzylindrische Wickelkernteile geteilt ist, die mit einem die Teilungszone an einem Ende abschließenden, ein Gelenk zwischen den beiden Wickelkernteilen bildenden, elastisch deformierbaren Steg, dessen umfangsseitige Begrenzungsfläche einen Abschnitt der Umfangsfläche des Wickelkernes bildet, einstückig miteinander verbunden und mit einer im Bereich des offenen anderen Endes der Teilungszone vorgesehenen lösbaren Verbindungseinrichtung zusammengehalten sind und die ein durch das offene Ende der Teilungszone in dieselbe eingeführtes Ende des Bandes zur Befestigung desselben an dem Wickelkern entlang zumindest eines Teiles der Teilungszone zwischen ihnen festklemmen.

Ein solcher Wickelkern ist aus der DE-AS 29 01 383 bekannt, wobei es sich um einen Wickelkern für ein Magnetband handelt. Bei diesem bekannten Wickelkern sind die beiden Wickelkernteile durch einen den überwiegenden Teil des Wickelkernes bildenden Hauptteil und einen mit dem Hauptteil über den Steg einstückig verbundenen, nur einen Bruchteil des Wickelkernes bildenden Klemmteil gebildet, der vom Hauptteil entlang einer im wesentlichen in tangentialer Richtung verlaufenden Teilungszone geteilt ist und der im wesentlichen in radialer Richtung des Wickelkernes zwischen einer vom Hauptteil weggeschwenkten Lage und einer in den Hauptteil eingeschwenkten Klemmlage gegenüber dem Hauptteil verschwenkbar ist. Aufgrund der Kleinheit des Klemmteiles und des darin begründeten kurzen Hebelarmes desselben muß der Klemmteil in seiner vom Hauptteil weggeschwenkte Lage um einen relativ großen Winkelabstand gegenüber seiner Klemmlage verschwenkt sein, um ein durch den Klemmteil unbehindertes Einführen des zu befestigenden Endes des Magnetbandes in die Teilungszone zu ermöglichen. Zum Festklemmen des zu befestigenden Endes des Magnetbandes muß der Klemmteil um diesen relativ großen Winkelabstand von seiner vom Hauptteil weggeschwenkten Lage in seine Klemmlage verstellt werden, was relativ große Verformungen des elastisch deformierbaren Steges mit sich bringt, die zu Unregelmäßigkeiten in der Umfangsfläche des Wickelkernes führen können. Solche Unregelmäßigkeiten sind aber besonders nachteilig, da sich dieselben bei längerer Nichtbenützung des Winkelkernes als bleibende Deformierungen in den übereinanderliegenden Windungen des um die Umfangsfläche des Wickelkernes gewickelten Magnetbandes abdrücken. Diese Deformierungen beeinträchtigen beim Abwickeln des Magnetbandes vom Wickelkern in einem hiefür vorgesehenen Gerät den gleichmäßigen Kontakt zwischen dem Magnetband und dem damit zusammenwirkenden geräteseitigen Magnetkopf zum Aufzeichnen und Wiedergeben von auf dem Magnetband speicherbaren Informationssignalen, was sich störend in der Aufnahme- und Wiedergabequalität der Informationssignale niederschlägt. Ferner ist bei dem bekannten Wickelkern beim Festklemmen des Magnetbandes am Wickelkern das zu befestigende Ende des Magnetbandes nur bei einer Lage des Wickelkernes, jedoch nicht bei der hiezu gewendeten Lage des Wickelkernes in einer vorgegebenen Richtung in die Teilungszone zwischen den Wickelkernteilen einführbar, weil nur bei dieser einen Lage das offene Ende der Teilungszone dem zu befestigenden Ende des Magnetbandes mit der richtigen Orientierung gegenüberliegt. Dies ist bei einem automatisierten Festklemmen mit einer automatischen Zufuhr der Wickelkerne nachteilig, weil dann Wickelkerne, die in der gewendeten Lage zugeführt werden, wieder ausgeschieden werden müssen. Auch ist ein solcher Klemmteil aufgrund seiner Kleinheit weniger robust, so daß die Gefahr einer Beschädigung oder eines Bruches bei seiner Manipulation beim Festklemmen des Magnetbandes am Wickelkern relativ groß ist.

Die Erfindung hat sich zur Aufgabe gestellt, die vorstehend angeführten Schwierigkeiten zu vermeiden und einen Wickelkern zu schaffen, bei dem die beiden Wickelkernteile nur um einen relativ kleinen Winkelabstand voneinander weggeschwenkt sein müssen, um das zu befestigende Ende des Bandes in die Teilungszone zwischen denselben einführen zu können, bei dem das zu befestigende Ende des Bandes in beiden zueinander gewendeten Lagen des Wickelkernes in die Teilungszone zwischen den Wickelkernteilen einführbar ist und bei dem beide Wickelkernteile robust ausgebildet sind. Hiezu ist die Er findung dadurch gekennzeichnet, daß die beiden Enden der Teilungszone des Wickelkernes im wesentlichen diametral zueinander liegen und daß die Teilungszone zumindest im Bereich von ihrem offenen Ende im wesentlichen in radialer Richtung des Wickelkernes verläuft. Auf diese Weise ist erreicht, daß für das gegenseitige Verschwenken der beiden Wickelkernteile optimale Hebelarmverhältnisse geschaffen sind, so daß die beiden Wickelkernteile nur um einen relativ kleinen Winkelabstand voneinander weggeschwenkt sein müssen, um das zu befestigende Ende des Bandes in die Teilungszone zwischen den beiden Wickelkernteilen einführen zu können. Hiedurch ist erreicht, daß beim Festklemmen des Bandes zwischen den beiden Wickelkernteilen dieselben nur um einen kleinen Winkelabstand zueinander hingeschwenkt werden und daher praktisch keine Verformung des elastisch deformierbaren Steges auftritt, so daß Störungen in der Umfangsfläche des Wickelkernes und die darin im Falle eines Magnetbandes begründete Verminderung der Aufnahme- und Wiedergabequalität beim Abwickeln des Magnetbandes vom Wickelkern vermieden sind. Ferner ist hierdurch erreicht, daß das zu befestigende Ende des Bandes sowohl in einer Lage als auch in der hiezu gewendeten Lage des Wickelkernes in die Teilungszone zwischen den beiden Wickelkernteilen einführbar ist, weil die Teilungszone zumindest im Bereich von deren offenem Ende, über das das zu befestigende Ende des Bandes zwischen die beiden Wickelkernteile einführbar ist, in beiden Lagen des Wickelkernes stets in derselben Richtung, nämlich in radialer Richtung des Wickelkernes, ausrichtbar ist. Ferner ist auf diese Weise eine robuste Ausbildung erreicht, bei der die Gefahr einer Beschädigung oder eines Bruches der Wickelkernteile bei deren Manipulation beim Festklemmen des Bandes praktisch ausgeschlossen ist.

An dieser Stelle sei erwähnt, daß aus der DE-AS 24 41 386 ein geteilter Wickelkern bekannt ist, bei dem die Teilungszone zwischen den beiden teilzylindrischen Wickelkernteilen diametral zueinander liegende Enden aufweist. Hiebei sind aber die beiden Wickelkernteile zur Gänze voneinander lösbar und nicht über einen elastisch deformierbaren Steg einstückig miteinander verbunden, so daß sich daraus keine Lehren dahingehend ableiten lassen, eine möglichst geringe Verformung eines solchen Steges zwischen zwei über diesen Steg einstückig miteinander verbundenen Wickelkernteilen beim Festklemmen des Bandes zwischen denselben zu gewährleisten, wie dies bei dem erfindungsgemäßen Wickelkern der Fall ist. Aufgrund der gänzlichen Lösbarkeit der beiden Wickelkernteile voneinander ist ferner ein höherer Aufwand hinsichtlich der Lagerhaltung und der Manipulation beim Festklemmen des Bandes erforderlich, als dies bei dem erfindungsgemäßen Wickelkern mit zwei einstückig miteinander verbundenen Wickelkernteilen der Fall ist.

Bei einem erfindungsgemäßen Wickelkern können die beiden Wickelkernteile so ausgebildet sein, daß einer im wesentlichen die Form eines halben Hohlzylinders hat. Als vorteilhaft hat sich aber erwiesen, wenn der Wickelkern längs einer diametral durch den Wickelkern verlaufenden Teilungszone in zwei im wesentlichen spiegelsymmetrische Wickelkernteile geteilt ist. Auf diese Weise ist hinsichtlich eines Spritzgußverfahrens zur Herstellung ein

es aus Kunststoff bestehenden Wickelkernes in werkzeugtechnischer Hinsicht eine einfache Ausbildung erreicht. Ferner weisen hiebei die beiden Wickelkernteile gleich große optimale Robustheit auf.

Um einen axialen Versatz der beiden zueinander hingeschwenkten Wickelkernteile, die hiebei mit der beispielsweise als Rasteinrichtung oder als Schnappeinrichtung ausgebildeten Verbindungseinrichtung zusammengehalten sind, zu vermeiden, können die Wickelkernteile beim Festklemmen des Bandes mittels eines separaten Positionierwerkzeuges in den beiden axialen Richtungen des Wickelkernes einander gegenüber positioniert werden. Als vorteilhaft hat sich aber erwiesen, wenn der Wickelkern zur axialen Positionierung der beiden Wickelkernteile einander gegenüber im Bereich der Teilungszone zwischen den beiden Wickelkernteilen mindestens ein Paar von zueinander korrespondierenden, je an einem der beiden Wickelkernteile vorgesehenen Positionieranschlägen aufweist, von denen einer den korrespondierenden anderen in mindestens einer der beiden axialen Richtung übergreift. Hierdurch ist auch nach dem Festklemmen des Bandes auf einfache Weise stets eine sichere und genaue axiale Positionierung der beiden Wickelkernteile einander gegenüber gewährleistet.

Ein solches Paar von Positionieranschlägen kann so ausgebildet sein, daß mit demselben ein Wickelkernteil gegenüber dem anderen nur in einer der beiden axialen Richtungen positioniert wird, oder auch so, daß mit demselben ein Wickelkernteil gegenüber dem anderen in beiden axialen Richtungen positioniert wird, wie dies beispielsweise mit einer senkrecht zu den beiden axialen Richtungen ausgerichteten Stift-Loch-Verbindung erreicht wird, die aber spritzgußtechnisch schwierig herzustellen ist. Positionieranschläge. von denen einer den korrespondierenden anderen nur in einer axialen Richtung übergreift und die daher einen Wickelkernteil gegenüber dem anderen Wickelkernteil nur in einer axialen Richtung positionieren, sind einfacher herzustellen. Es hat sich daher als vorteilhaft erwiesen, wenn zwei Paare von zueinander korrespondierenden Positionieranschlägen vorgesehen sind, von denen einer den korrespondierenden anderen nur in einer axialen Richtung übergreift, und die beiden Positionieranschläge an jedem der Wickelkernteile senkrecht zu den beiden axialen Richtungen einander gegenüber versetzt angeordnet sind. Hiedurch ist eine spritzgußtechnisch leicht entformbare Ausbildung erreicht.

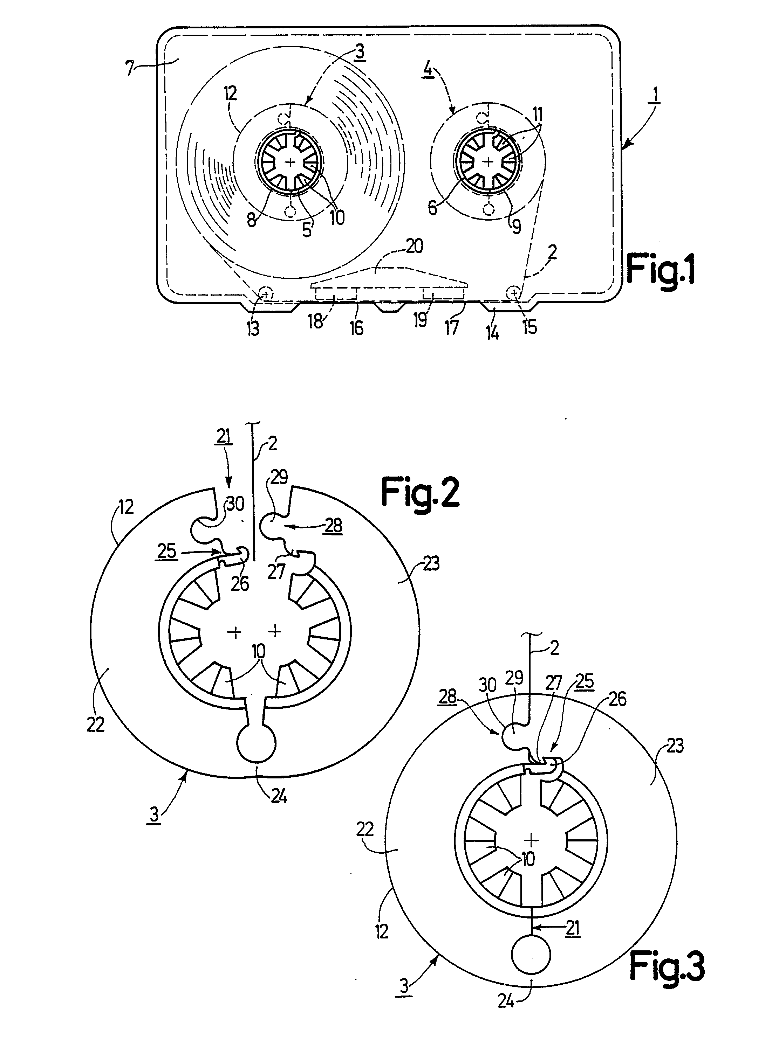

Die Erfindung wird im folgenden anhand von drei Ausführungsbeispielen, auf die sie jedoch nicht beschränkt sein soll, näher beschrieben. Die Fig. 1 zeigt schematisch in etwa zweifacher Vergrößerung gegenüber ihrer natürlichen Größe eine Kassette für ein Magnetband, in der zwei erfindungsgemäße Wickelkerne gemäß einem ersten Ausführungsbeispiel der Erfindung zum Aufwickeln des Magnetbandes nebeneinanderliegend untergebracht sind. Die Fig. 2 zeigt schematisch in einem gegenüber der Fig. 1 größeren Maßstab einen in der Kassette gemäß Fig. 1 untergebrachten erfindungsgemäßen Wickelkern mit zwei über einen Steg einstückig miteinander verbundenen Wickelkernteilen, wobei die beiden Wickelkernteile eine voneinander weggeschwenkte Lage einnehmen und ein Ende eines Magnetbandes in die Teilungszone zwischen den beiden Wickelkernteilen zum Festklemmen desselben zwischen diesen eingeführt ist. Die Fig. 3 zeigt den Wickelkern gemäß Fig. 2, wobei die beiden Wickelkernteile eine zueinander hingeschwenkte Lage einnehmen und eine Ende des Magnetbandes zwischen sich festgeklemmt halten. Die Fig. 4 zeigt analog wie die Fig. 2 in einem gegenüber dem Maßstab der Fig. 2 größeren Maßstab einen erfindungsgemäßen Wickelkern gemäß einem zweiten Ausführungsbeispiel der Erfindung. Die Fig. 5 zeigt in einem Schnitt längs der Linie V-V in Fig. 4 ein Detail des Wickelkernes gemäß Fig. 4. Die Fig. 6 zeigt analog wie die Fig. 4 einen erfindungsgemäßen Wickelkern gemäß einen dritten Ausführungsbeispiel der Erfindung.

Die Fig. 1 zeigt eine quaderförmige Kassette 1, in der zur Aufnahme eines Magnetbandes 2 zwei zylindrische Wickelkerne 3 und 4 untergebracht sind. Die Wickelkerne 3 und 4 sind mittels von ihren ebenen Seitenwänden in den beiden entgegengesetzten axialen Richtungen der Wickelkerne abstehenden Lagerringen 5 und 6 auf nicht näher dargestellte Weise in der nicht sichtbaren Bodenwand und der Deckenwand 7 der Kassette 1 drehbar gelagert. In der Bodenwand und der Deckenwand 7 sind je zu den Lagerringen 5 und 6 bzw. den Wickelkernen 3 und 4 koaxiale kreisrunde Durchbrüche 8 und 9 vorgesehen, durch die hindurch Wickeldorne eines zum Betreiben der Kassette 1 ausgebildeten Magnetbandgerätes zum rotierenden Antreiben der Wickelkerne 3 und 4 mit denselben in Antriebsverbindung bringbar sind, wobei von den Wickeldornen radial abstehende Mitnehmer mit den Mitnehmern 10 und 11 der Wickelkerne 3 und 4 in Eingriff treten.

Bei der in Fig. 1 dargestellten Kassette 1 ist das Magnetband 2 zur Gänze auf die zylindrische Umfangsfläche 12 des Wickelkernes 3 aufgewickelt. Vom Wickelkern 3 ist das Magnetband 2 über eine erste Bandführung 13 entlang der vorderen - schmalen Seitenwand 14 der Kassette 1 und eine zweite Bandführung 15 zum zweiten Wickelkern 4 geführt. In der Seitenwand 14 sind zwei Durchbrüche 16 und 17 vorgesehen, durch die hindurch ein Lösch-Magnetkopf und ein Aufnahme/Wiedergabe-Magnetkopf eines zum Betreiben der Kassette 1 vorgesehenen Magnetbandgerätes in Abtastverbindung mit dem Magnetband 2 treten können, wobei zum Andrücken des Magnetbandes 2 an die beiden Magnetköpfe in der Kassette 1 zwei Andruckfilze 18 und 19 vorgesehen sind, die auf einem auf nicht dargestellte Weise quer zur Seitenwand 14 verstellbar gelagerten Andruckfilzträger 20 angebracht sind.

In den Figuren 2 und 3 ist ein erfindungsgemäßer Wickelkern 3 dargestellt, wie er in der Kassette 1 untergebracht ist und über dessen zylindrische Umfangsfläche 12 das Magnetband 2 nach dem Befestigen desselben am Wickelkern wickelbar ist. Der Wickelkern 3, der aus Kunststoff besteht, ist längs einer diametral durch den Wickelkern 3 verlaufenden Teilungszone 21 in zwei teilzylindrische, im wesentlichen spiegelsymmetrische Wickelkernteile 22 und 23 geteilt, so daß die beiden an die Umfangsfläche 12 des Wickelkernes 3 angrenzenden Enden der Teilungszone 21 diametral zueinander liegen und die Teilungszone 21 im Bereich von ihrem offenen Ende in radialer Richtung des Wickelkernes 3 verläuft. Die beiden Wickelkernteile 22 und 23 sind mit einem die Teilungszone 21 an einem Ende abschließenden, ein Gelenk zwischen den beiden Wickelkernteilen 22 und 23 nach Art eines Filmscharnieres bildenden, elastisch deformierbaren Steg 24, dessen umfangsseitige Begrenzungsfläche einen Abschnitt der Umfangsfläche 12 des Wickelkernes 3 bildet, einstückig miteinander verbunden. Ferner sind die beiden Wickelkernteile 22 und 23 mit einer im Bereich des offenen Endes der Teilungszone 21 vorgesehenen, zweiteiligen, lösbaren Verbindungseinrichtung 25 zusammengehalten, die in vorliegendem Fall als Schnappeinrichtung ausgebildet ist. Die Schnappeinrichtung 25 weist einen von dem einen Wickelkernteil 22 abstehenden Schnapphaken 26 und einen vom anderen Wickelkernteil 23 abstehenden nasenförmigen Vorsprung 27 auf, den der Schnapphaken 26 im eingeschnappten Zustand der Schnappeinrichtung 25 hintergreift.

Die beiden Wickelkernteile 22 und 23 klemmen in ihrer in Fig. 3 dargestellten zueinander hingeschwenkten Lage ein durch das offene Ende der Teilungszone 21 in dieselbe eingeführtes Ende des Magnetbandes 2 zur Befestigung desselben an dem Wickelkern 3 entlang eines Teiles der Teilungszone 21 zwischen ihnen fest. Hiefür weist der Wickelkern 3 eine zweiteilige Klemmeinrichtung 28 auf, die durch einen von dem anderen Wickelkernteil 23 im Bereich der Teilungszone 21 abstehenden, im wesentlichen zylindrischen Klemmvorsprung 29 und eine zum Aufnehmen des Klemmvorsprungs in dem einen Wickelkernteil 22 vorgesehene, im wesentlichen hohlzylindrische Klemmvertiefung 30 gebildet ist. Beim Festklemmen des Magnetbandes 2 durch Verschwenken der beiden Wickelkernteile 22 und 23 zueinander hin drückt der Klemmvorsprung 29 das Magnetband 2 in die Klemmvertiefung 30 und hält, nachdem der Klemmvorsprung 29 zur Gänze in die Klemmvertiefung 30 eingedrungen ist, das Magnetband 2 klemmend fest, wobei aufgrund der großen Umschlingung des klemmvorsprunges 29 durch das Magnetband 2 dasselbe sicher festgehalten ist.

Durch die diametral verlaufende Teilung des Wickelkernes in die beiden über den Steg einstückig miteinander verbundenen Wickelkernteile sind für beide Wickelkernteile optimale Hebelarmverhältnisse hinsichtlich ihrer gegenseitigen Verschwenkbarkeit geschaffen, so daß beim Festklemmen des Magnetbandes zwischen den beiden Wickelkernteilen dieselben nur um einen relativ kleinen Winkelabstand zueinander hin verschwenkt werden müssen, was im Hinblick auf eine möglichst geringe Verformung des Steges vorteilhaft ist. Aufgrund des diametralen Verlaufes der Teilungszone verläuft dieselbe im Bereich des offenen Endes desselben in radialer Richtung, und zwar unabhängig davon, ob der Wickelkern die in den Figuren 2 und 3 dargestellten Lage oder die hiezu gewendete Lage einnimmt. Deshalb kann das zu befestigende Ende des Magnetbandes in beiden Lagen des Wickelkernes in derselben vorgegebenen Richtung, nämlich in radialer Richtung des Wickelkernes, in die Teilungszone zwischen die beiden Wickelkernteile eingeführt werden. Dies ist beim automatisierten Festklemmen mit einer automatischen Zufuhr der Wickelkerne vorteilhaft, weil dann die Wickelkerne in beiden zueinander gewendeten Lagen zum Festklemmen des Magnetbandes zwischen denselben verwendet werden können. Ferner ist durch die diametral verlaufende Teilung des Wickelkernes für beide Wickelkernteile eine optimale Robustheit erreicht, was im Hinblick auf eine problemlose Manipulation der beiden Wickelkernteile beim Festklemmen des Magnetbandes vorteilhaft ist. Durch das Vorsehen der Schnappeinrichtung sind die beiden Wickelkernteile nach dem Festklemmen des Magnetbandes besonders sicher zusammengehalten, so daß eine sichere Befestigung des Magnetbandes am Wickelkern gewährleistet ist.

Der in Fig. 4 dargestellte Wickelkern 31 gemäß einem zweiten Ausführungsbeispiel der Erfindung weist eine zylindrische Umfangsfläche 32 zum Aufwickeln eines nicht dargestellten Magnetbandes auf. Der Wickelkern 31 ist längs einer Teilungszone 33 in zwei über einen elastisch deformierbaren, ein Gelenk nach Art eines Filmscharnieres bildenden Steg 34 einstückig miteinander verbundene teilzylindrische Wickelkernteile 35 und 36 geteilt. Die Teilungszone 33 ist dabei so ausgebildet, daß die beiden Enden derselben diametral zueinander liegen und daß die Teilungszone im Bereich von ihrem offenen Ende in radialer Richtung des Wickelkernes 31 verläuft. Im Bereich des durch den Steg 34 abgeschlossenen Endes der Teilungszone 33 verläuft diese in einer von der radialen bzw. diametralen Richtung abweichenden Richtung, dies deshalb, damit die Teilungszone 33 in vorliegendem Fall nicht durch den Mitnehmer 37 des Wickelkernes 31 hindurchgeführt ist, sondern neben demselben verläuft. Aufgrund der diametralen Lage der beiden Enden der Teilungszone zueinander und des radialen Verlaufes der Teilungszone im Bereich von ihrem offenen Ende sind auch bei diesem Wickelkern für beide Wickelkernteile optimale Hebelarmverhältnisse und eine große Robustheit für beide Wickelkernteile erreicht und ist das zu befestigende Ende des Magnetbandes in den beiden zueinander gewendeten Lagen des Wickelkernes in die Teilungszone zwischen den beiden Wickelkernteilen einführbar, so daß auch bei diesem Wickelkern die entsprechenden erfindungsgemäßen Vorteile wie beim Wickelkern gemäß den Figuren 2 und 3 erhalten sind.

Der Wickelkern 31 weist zur axialen Positionierung der beiden Wickelkernteile 35 und 36 einander gegenüber im Bereich der Teilungszone 33 zwischen den beiden Wickelkernteilen zwei Paare von zueinander korrespondierenden, je an einem der beiden Wickelkernteile 35 und 36 vorgesehenen Positionieranschlägen auf, von denen einer den korrespondierenden anderen in einer der beiden axialen Richtungen des Wickelkernes 31 übergreift, von denen in Fig. 5 die eine Richtung mit dem Pfeil 38 und die andere Richtung mit dem Pfeil 39 angegeben ist. Die Positionieranschläge des einen Paares sind durch einen von dem einen Wickelkernteil 35 abstehenden Lappen 40 und durch einen Abschnitt 41 des anderen Wickelkernteiles 36 gebildet. In der nicht dargestellten zueinander hingeschwenkten Lage der beiden Wickelkernteile 35 und 36 übergreift der Lappen 40 den Abschnitt 41 in der axialen Richtung 39 und umgekehrt der Abschnitt 41 der Lappen 40 in der axialen Richtung 38, wobei der Lappen 40 und der Abschnitt 41 mit ihren einander zugewandten Begrenzungsflächen 42 und 43 aneinander anliegen. Die Positionieranschläge des zweiten Paares sind durch einen Abschnitt 44 eines an dem einen Wickelkernteil 35 vorgesehenen, dem offenen Ende der Teilungszone 33 am nächsten liegenden, mit einer Ausnehmung 45 versehenen Mitnehmers 46 und durch einen vom anderen Wickelkernteil 36 abstehenden Vorsprung 47 gebildet. In der nicht dargestellten zueinander hingeschwenkten Lage der beiden Wickelkernteile 35 und 36 befindet sich der Vorsprung 47 in der Ausnehmung 45 im Mitnehmer 46 und übergreift der Abschnitt 44 den Vorsprung 47 in der axialen Richtung 38 und umgekehrt der Vorsprung 47 den Abschnitt 44 des Mitnehmers 46 in der axialen Richtung 39 , wobei der Abschnitt 44 des Mitnehmers 46 und der Vorsprung 47 mit ihren einander zugewandten Begrenzungsflächen 48 und 49 aneinander anliegen. Mit den beiden gegensinnig wirksamen Paaren von Positionieranschlägen 40 und 41 bzw. 44 und 47 werden die beiden Wickelkernteile 35 und 36 in ihrer zueinander hingeschwenkten Lage einander gegenüber axial positioniert, so daß ein axialer Versatz der beiden Wickelkernteile mit Sicherheit vermieden ist. Ein solcher axialer Versatz würde sich störend im Hinblick auf ein gleichmäßiges Umlaufen des Wickelkernes beim Auf- bzw. Abwickeln eines Magnetbandes auswirken. Wie aus Fig.4 ersichtlich ist, sind die Positionieranschläge so am Wickelkern 31 vorgesehen, daß die beiden Positionieranschläge 40 und 44 bzw. 41 und 47 an jedem der Wickelkernteile 35 bzw. 36 senkrecht zu den beiden axialen Richtungen 38 und 39 einander gegenüber versetzt angeordnet sind. Hierdurch ist eine spritzgußtechnisch leicht entformbare Ausbildung erreicht, weil die zur Herstellung der Positionieranschläge erforderlichen Spritzgußwerkzeugteile gegensinnig in den beiden axialen Richtungen von den Positionieranschlägen entfernbar sind.

Beim Wickelkern 31 gemäß Fig.4 ist keine separate Verbindungseinrichtung zum Zusammenhalten der beiden Wickelkernteile 35 und 36 vorgesehen, sondern zum Zusammenhalten der beiden Wickelkernteile dient eine Klemmeinrichtung 50, die an sich den selben Aufbau wie jene beim Wickelkern 3 gemäß den Figuren 2 und 3 aufweist, die aber in diesem Fall so dimensioniert ist, daß der Klemmvorsprung 51 bei zueinander hingeschwenkten Wickelkernteilen mit Preßsitz in der Klemmvertiefung 52 aufgenommen ist. Somit erfüllt die Klemmeinrichtung 50 in diesem Fall eine Doppelfunktion, da sie sowohl zum Festklemmen eines Magnetbandes am Wickelkern 31 als auch zum Zusammenhalten der beiden Wickelkernteile 35 und 36 dient.

Bei dem in Fig.6 dargestellten Wickelkern 53 gemäß einem dritten Ausführungsbeispiel der Erfindung liegen die beiden Enden einer Teilungszone 54 zwischen zwei über einen elastisch deformierbaren, ein Gelenk nach Art eines Filmscharnieres bildenden Steg 55 einstückig miteinander verbundenen Wickelkernteilen 56 und 57 ebenfalls diametral zueinander, so daß auch in diesem Fall optimale Hebelarmverhältnisse und die daraus resultierenden Vorteile erhalten sind. Auch verläuft die Teilungszone 54 im Bereich von ihrem offenen Ende in radialer Richtung des Wickelkernes 53, so daß das zu befestigende Ende eines Magnetbandes in beiden zueinander gewendeten Lagen des Wickelkernes 53 in das offene Ende der Teilungszone 54 in derselben Richtung, nämlich in radialer Richtung, einführbar ist. Beim Wickelkern 53 ist die Teilungszone 54 nicht diametral durch denselben geführt, sondern nimmt anschließend an den radialen Verlauf im Bereich des offenen Endes einen eine Hälfte eines Lagerringes 58 des Wickelkernes 53 teilenden Verlauf ein, so daß von den beiden Wickelkernteilen 56 und 57 der Wickelkernteil 57 im wesentlichen die Form eines halben Hohlzylinders aufweist, der durch den Wickelkernteil 56 zum gesamten Wickelkern 53 ergänzt ist. Durch diese Wahl des Verlaufes der Teilungszone 54 ist erreicht, daß sich alle Mitnehmer 59 des Wickelkernes 53 am Wickelkernteil 56 befinden, was im Hinblick auf einen gleichmäßigen Winkelabstand der Mitnehmer 59 günstig ist.

Zum Zusammenhalten der beiden Wickelkernteile 56 und 57 und zum Festklemmen eines Magnetbandes weist der Wickelkern 53 analog wie der Wickelkern 31 gemäß Fig.4 eine als Klemmeinrichtung 60 ausgebildete Verbindungseinrichtung auf, die aus einem vom Wickelkernteil 57 abstehenden Klemmfortsatz 61 und einer im anderen Wickelkernteil 56 zur Aufnahme des Klemmfortsatzes 61 vorgesehenen Klemmvertiefung 62 besteht. Bei zueinander hingeschwenkten Wickelkernteilen 56 und 57 sind dieselben mit der Klemmeinrichtung 60 zusammengehalten und ist ein Magnetband mit der Klemmeinrichtung 60 klemmend festgehalten und kann um die zylindrische Umfangsfläche 63 des Wickelkernes 53 gewickelt werden.

Selbstverständlich sind im Rahmen der Erfindung noch weitere Ausführungsformen von Wickelkernen möglich. So könnten beispielsweise anstelle der Klemmeinrichtung, die bei jedem der drei vorstehend beschriebenen Wickelkerne vorgesehen ist, an den im Bereich des offenen Endes der Teilungszone liegenden, in radialer Richtung verlaufenden Begrenzungswänden der beiden Wickelkernteile Verzahnungen nach Art von Rändelungen mit in axialer Richtung des Wickelkernes verlaufenden Zähnen vorgesehen sein, die bei zueinander hingeschwenkten Wickelkernteilen ineinandergreifen, wobei das Magnetband von den Zahnspitzen in die korrespondierenden Zahnlücken gedrückt und aufgrund der dabei erzielten mehrfachen Umlenkung sicher klemmend festgehalten wird. Bei jedem der drei vorstehend beschriebenen Wickelkerne liegen das geschlossene Ende und das offene Ende der Teilungszone exakt diametral zueinander. Es könnte aber auch eines der beiden Enden eine von der exakten diametralen Lage etwas abweichende Lage einnehmen, wobei Abweichungen in entgegengesetzten Richtungen von höchstens je 5° sich als noch zulässig erwiesen haben. Die erfindungsgemäßen Wickelkerne können nicht nur zum Aufwickeln von Magnetbändern, wie dies bei den Wickelkernen gemäß der drei vorstehend beschriebenen Ausführungsbeispiele der Fall ist, sondern auch zum Aufwickeln von anderen Bändern verwendet werden, beispielsweise von Textil- und Kunststoff-Farbbändern für Drucker, wie Anschlagdrucker und Thermotransferdrucker, wobei die Farbbänder in Farbbandkassetten untergebracht sind.


## Ansprüche

1. Wickelkern für ein Band, insbesondere ein Magnetband oder ein Farbband, über dessen zylindrische Umfangsfläche das Band wickelbar ist und der längs einer Teilungszone in zwei teilzylindrische Wickelkernteile geteilt ist, die mit einem die Teilungszone an einem Ende abschließenden, ein Gelenk zwischen den beiden Wickelkernteilen bildenden, elastisch deformierbaren Steg, dessen umfangsseitige Begrenzungsfläche einen Abschnitt der Umfangsfläche des Wickelkernes bildet, einstückig miteinander verbunden und mit einer im Bereich des offenen anderen Endes der Teilungszone vorgesehenen lösbaren Verbindungseinrichtung zusammengehalten sind und die ein durch das offene Ende der Teilungszone in dieselbe eingeführtes Ende des Bandes zur Befestigung desselben an dem Wickelkern entlang zumindest eines Teiles der Teilungszone zwischen ihnen festklemmen, dadurch gekennzeichnet, daß die beiden Enden der Teilungszone des Wickelkernes im wesentlichen diametral zueinander liegen und daß die Teilungszone zumindest im Bereich von ihrem offenen Ende im wesentlichen in radialer Richtung des Wickelkernes verläuft.

2. Wickelkern nach Anspruch 1, dadurch gekennzeichnet, daß der Wickelkern längs einer diametral durch den Wickelkern verlaufenden Teilungszone in zwei im wesentlichen spiegelsymmetrische Wickelkernteile geteilt ist.

3. Wickelkern nach Anspruch 1 oder 2, dadurch gekennzeichnet, daß der Wickelkern zur axialen Positionierung der beiden Wickelkernteile einander gegenüber im Bereich der Teilungszone zwischen den beiden Wickelkernteilen mindestens ein Paar von zueinander korrespondierenden, je an einem der beiden Wickelkernteile vorgesehenen Positionieranschlägen aufweist, von denen einer den korrespondierenden anderen in mindestens einer der beiden axialen Richtungen übergreift.

4. Wickelkern nach Anspruch 3, dadurch gekennzeichnet, daß zwei Paare von zueinander korrespondierenden Positionieranschlägen vorgesehen sind, von denen einer den korrespondierenden anderen nur in einer axialen Richtung übergreift, und daß die beiden Positionieranschläge an jedem der Wickelkernteile senkrecht zu den beiden axialen Richtungen einander gegenüber versetzt angeordnet sind.

Fig.1

Fig.2

Fig.3

Fig.4

Fig.5

Fig.6